# EUROPEAN PATENT APPLICATION

(11) **EP 4 165 992 A1**
(43) Date of publication of application: **19.04.2023**
(21) Application number: 21821333.8
(22) Date of filing: 11.06.2021
(51) Int. Cl.: A01P 17/00, A01M 29/34, A01G 13/00, A01N 25/10, A01N 25/34, A01N 59/06

(54) **GASTROPOD REPELLENT FILM AND PLANT CULTIVATION METHOD**

(30) Priority: 12.06.2020 JP 2020102423
(71) Applicant: Earth Create Co., Ltd., Osaka-shi, Osaka, 541-0053 (JP)
(72) Inventor: NISHIMIYA Yoshiyuki, Osaka-shi, Osaka 541-0053 (JP); YANASE Yasutaka, Osaka-shi, Osaka 541-0053 (JP)
(74) Representative: Viering, Jentschura & Partner mbB Patent- und Rechtsanwälte
(86) International application number: PCT/JP2021/022337
(87) International publication number: WO 2021/251492

(57) **Abstract**

A gastropod repellent film of the present invention includes at least an inorganic filler layer containing an inorganic filler and a thermoplastic resin. The inorganic filler layer is an outermost layer. The inorganic filler includes calcium carbonate particles. The inorganic filler has a percentage content of greater than 50.0% by mass in the gastropod repellent film. The gastropod repellent film has a density of at least 1.05 g/cm³ and no greater than 1.25 g/cm³. A plant cultivation method of the present invention uses the gastropod repellent film.

## Description

### TECHNICAL FIELD

The present invention relates to a gastropod repellent film and a plant cultivation method.

### BACKGROUND ART

In cultivation of plants such as agricultural crops, it is important to reduce feeding damage by pests from the viewpoint of raising yields and quality of harvested products. Typical examples of the pests include gastropods (e.g., slugs and snails).

One example of measures against gastropods is a method in which an attractant containing a pesticide (e.g., metaldehyde or ferric phosphate) is placed on agricultural soil. Another example of the measures against gastropods is a method in which a gastropod repellent film containing a copper compound is placed on agricultural soil (see Patent Literature 1, for example).

### CITATION LIST

### Patent Literature

Patent Literature 1
Japanese Patent Application Laid-Open Publication No. 2018-035070

### SUMMARY OF INVENTION

### Technical Problem

However, it is difficult for the attractant and the gastropod repellent film described above to sufficiently reduce feeding damage by gastropods. Furthermore, the pesticide of the attractant and the copper compound of the gastropod repellent film described above are liable to ooze out into the agricultural soil.

The present invention has been made in view of the foregoing and has its object of providing a gastropod repellent film that can reduce feeding damage by gastropods and a plant cultivation method using the same.

### Solution to Problem

A gastropod repellent film according to the present invention includes at least an inorganic filler layer containing an inorganic filler and a thermoplastic resin. The inorganic filler layer is an outermost layer. The inorganic filler includes calcium carbonate particles. The inorganic filler has a percentage content of greater than 50.0% by mass in the gastropod repellent film. The gastropod repellent film has a density of at least 1.05 g/cm³ and no greater than 1.25 g/cm³.

A plant cultivation method according to the present invention uses the above-described gastropod repellent film.

### Advantageous Effects of Invention

The gastropod repellent film and the plant cultivation method of the present invention can reduce feeding damage by gastropods.

### BRIEF DESCRIPTION OF DRAWINGS

FIG. 1

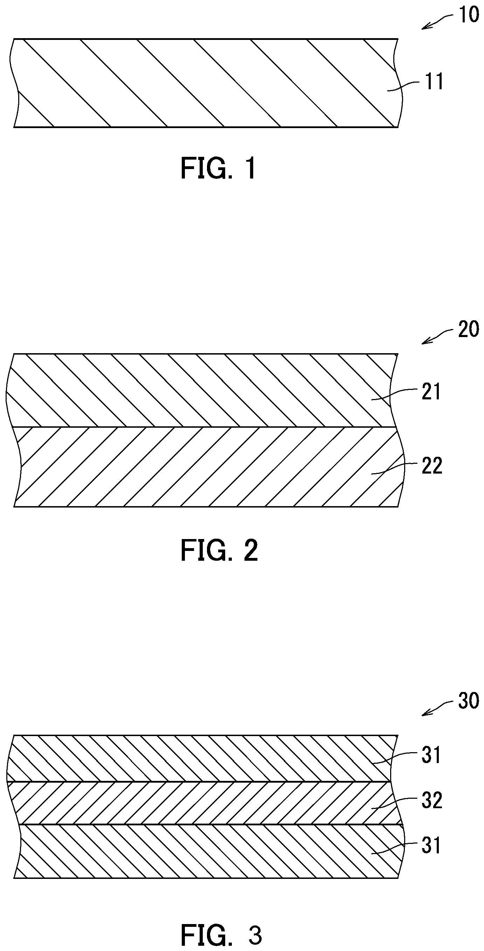

   FIG. 1 is a cross-sectional view of an example of the structure of a gastropod repellent film of the present invention.
FIG. 2
   FIG. 2 is a cross-sectional view of another example of the structure of the gastropod repellent film of the present invention.
FIG. 3
   FIG. 3 is a cross-sectional view of another example of the structure of the gastropod repellent film of the present invention.
FIG. 4

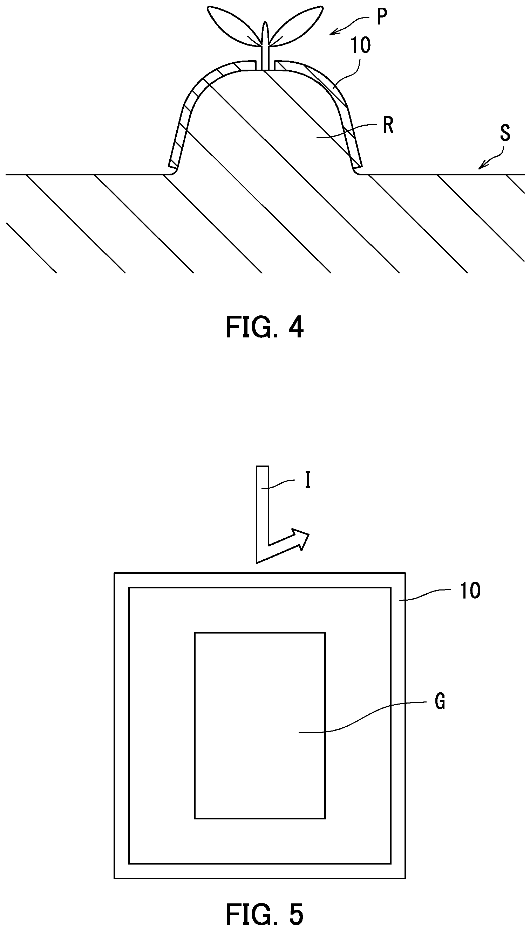

   FIG. 4 is a cross-sectional view of an example of a plant cultivation method of the present invention.
FIG. 5
   FIG. 5 is a cross-sectional view of another example of the plant cultivation method of the present invention.

### DESCRIPTION OF EMBODIMENTS

The following describes embodiments of the present invention. However, the present invention is not limited to the following embodiments and can be practiced within a scope of objects of the present invention with alterations made as appropriate. One type of each material described in the embodiments of the present invention may be used independently, or two or more types of the material may be used in combination.

### <First Embodiment: Gastropod Repellent Film>

A gastropod repellent film (also referred to below simply as repellent film) according to a first embodiment of the present invention includes at least an inorganic filler layer containing an inorganic filler and a thermoplastic resin. The inorganic filler layer is an outermost layer. The inorganic filler includes calcium carbonate particles. The inorganic filler has a percentage content of greater than 50.0% by mass in the gastropod repellent film of the present invention. The repellent film of the present invention has a density of at least 1.05 g/cm³ and no greater than 1.25 g/cm³. The repellent film of the present invention can reduce feeding damage by gastropods.

Note that the density of the repellent film of the present invention refers to a ratio (i.e., bulk density) of the mass of the repellent film of the present invention to a volume calculated from the dimension of the repellent film of the present invention.

The repellent film of the present invention can be used as a mulching film, a cord (e.g., an attraction cord or tie) for supporting plants, or a sack for wrapping fruits. Alternatively, the repellent film of the present invention is processed into a band shape to be used as a tape to prevent gastropods from entering agricultural soil.

The present inventors found that a film containing calcium carbonate particles and a thermoplastic resin have significant effect of repelling gastropods. The present inventors also found that the effect of repelling gastropods can be increased by reducing its density and reducing the percentage content of the thermoplastic resin (increasing the percentage content of the inorganic filler) in the above-described film. Based on the above finding, the inventors have completed the present invention. Although the reason why the repellent film of the present invention has the above effect is not clear, it is presumed to be at least on one of the following first to third reasons.

The first reason will be explained. Some of the calcium carbonate particles of the repellent film of the present invention are present in a state protruding like needles from the surface of the repellent film of the present invention to form a micro-level kenzan structure on the surface of the repellent film of the present invention. Micro-level kenzan structure such as above may injure gastropods. Therefore, it is considered that gastropods avoid moving on the repellent film of the present invention.

The second reason will be described. Gastropods generally have tendencies to prefer acidic environments and dislike alkaline environments. The calcium carbonate of the repellent film of the present invention, which is a basic compound, gradually elutes with use. As such, it is considered that the surface of the repellent film of the present invention is inclined to the alkaline side. Therefore, it is considered that gastropods avoid moving on the repellent film of the present invention.

The third reason will be explained. Gastropods typically prefer wet environments. The calcium carbonate particles contained in the repellent film of the present invention are somewhat hygroscopic. As such, the surface of the repellent film of the present invention is dry compared to the surrounding environment. Therefore, it is considered that gastropods avoid moving on the repellent film of the present invention.

Furthermore, the density of the repellent film of the present invention is significantly smaller than the theoretical density obtained from the density of the calcium carbonate particles (approximately 2.7 g/cm³) and that of the thermoplastic resin (approximately 0.9 g/cm³). This is because relatively large voids (e.g., voidage of 15 to 20% by volume) are present between the calcium carbonate particles and the thermoplastic resin in the inorganic filler layer of the repellent film of the present invention. In the repellent film of the present invention, such voids are present in the inorganic filler layer and the percentage content of the thermoplastic resin is low. As such, it is considered that the calcium carbonate particles contained in the inorganic filler layer gradually bleed out and are readily exposed (bleed out) on the surface of the repellent film of the present invention. Therefore, it is considered that the repellent film of the present invention can effectively exert the repellant effect based on the first to third reasons as a result of the calcium carbonate particles gradually bleeding out and being exposed to the surface of the repellent film of the present invention.

Note that the repellant effect exerted for the first to third reasons can be maintained in the repellent film of the present invention even when the repellent film becomes wet by watering or rainfall because the calcium carbonate particles, which serve as an effective component, are fixed to the film by the thermoplastic resin. Therefore, use of the repellent film of the present invention can exert the repellant effect over a long period of time compared to a case in which the calcium carbonate particles or an attractant are/is directly placed on agricultural soil.

Note that the repellent film of the present invention can exert the following first to third effects besides reduction in feeding damage by gastropods.

The first effect will be explained. The inorganic filler has a percentage content of greater than 50.0% by mass in the repellent film of the present invention. As such, the repellent film of the present invention can be disposed of as combustible waste because the inorganic filler has the highest percentage content. Therefore, the repellent film of the present invention has low disposal cost. Furthermore, a part (e.g., a leaf, a root, a stem, or a vine) of a plant may adhere to the repellent film of the present invention with use. A part of a plant such as above should be disposed of as combustible waste. The repellent film of the present invention can be disposed of as combustible waste as described above. Therefore, even if such a part of a plant remains adhering to the repellent film of the present invention after use, the repellent film can be disposed of as it is as combustible waste without separating the part of the plant therefrom. Therefore, the repellent film of the present invention is easy to dispose of. By contrast, resin-made cultivation materials (e.g., resin-made mulching films and resin-made cords) should be disposed of as incombustible waste. Therefore, when a part of a plant adheres to the resin-made cultivation material, it is necessary for disposal to separate the part of the plant from the resin-made cultivation material before disposal, which makes disposal time-consuming.

The second effect will be explained. The repellent film of the present invention contains calcium carbonate particles that are particles with high whiteness, and therefore has a surface with high whiteness. Flying insects (e.g., butterflies, moths, and aphids) that are pests in cultivation of plants such as crops tend to dislike materials with high whiteness. Therefore, as a result of placement of the repellent film of the present invention in the vicinity of crops, feeding damage by flying insets can be also reduced. Furthermore, as a result of placement of the repellent film of the present invention in the vicinity of a plant, sunlight reflected by the repellent film of the present invention hits crops to promote photosynthesis of the crops. As a result, the repellent film of the present invention can raise the yield and the quality of harvested products from the crops. For example, in cultivation of tomatoes, the sugar content of harvested tomatoes can be increased by using the repellent film of the present invention as a mulching film.

The third effect will be explained. The calcium carbonate particles of the repellent film of the present invention elute with use to render the surrounding soil and the surface of the repellent film of the present invention alkaline. Molds and fungi are typically inhibited from growing in alkaline environments. Therefore, the repellent film of the present invention can exert antifungal effect and antibacterial effect.

The inorganic filler has a percentage content of greater than 50.0% by mass in the repellent film of the present invention, preferably greater than 50.0% by mass and no greater than 65.0% by mass, and more preferably greater than 50.0% by mass and no greater than 60.0% by mass. As a result of the percentage content of the inorganic filler being set to greater than 50.0% by mass in the repellent film of the present invention, feeding damage by gastropods can be effectively reduced. Furthermore, carbon dioxide emissions can be reduced in incineration of the repellent film of the present invention. Moreover, inorganic fillers are typically less expensive than thermoplastic resins. Therefore, use of a large amount of the inorganic filler can reduce the material cost of the repellent film of the present invention. As a result of the percentage content of the inorganic filler being set to no greater than 65.0% by mass in the repellent film of the present invention, the repellent film of the present invention can have increased strength.

The repellent film of the present invention has a density of at least 1.05 g/cm³ and no greater than 1.25 g/cm³, and preferably has a density of at least 1.10 g/cm³ and no greater than 1.20 g/cm³. As a result of the density of the repellent film of the present invention being set to at least 1.05 g/cm³ and no greater than 1.25 g/cm³, the repellent film of the present invention can further effectively exert the repellant effect.

The repellent film of the present invention may have a single-layer structure or may have a multilayer structure. In a case in which the repellent film of the present invention has a multilayer structure, the number of inorganic filler layers may be one or two or more in the repellent film of the present invention. In a case in which the repellent film of the present invention includes two or more inorganic filler layers, at least one of the inorganic filler layers is an outermost layer. In this case, the other inorganic filler layer(s) may each be an outermost layer or an inner layer. In a case in which the repellent film of the present invention has a multilayer structure, it is preferable that the repellent film of the present invention further includes a resin layer containing a thermoplastic resin.

The repellent film of the present invention is placed on the soil, for example, for use. In a case in which the repellent film of the present invention has a multilayer structure, the repellent film of the present invention is preferably used with the side of the inorganic filler layer facing upward (being the side opposite to the soil).

The repellent film of the present invention will be described in detail below with reference to the drawings. FIG. 1 is a cross-sectional view of a repellent film 10 that is an example of the repellent film of the present invention. The repellent film 10 has a single-layer structure. In detail, the repellent film 10 includes an inorganic filler layer 11.

FIG. 2 is a cross-sectional view of a repellent film 20 that is another example of the repellent film of the present invention. The repellent film 20 has a two-layer structure. In detail, the repellent film 20 includes an inorganic filler layer 21 and a resin layer 22. The inorganic filler layer 21 and the resin layer 22 each are an outermost layer.

In a case in which the repellent film 20 is a mulching film, it is preferable that the resin layer 22 further contains a black pigment (e.g., carbon black or graphite). Here, the inorganic filler layer 21 has a surface with high whiteness as described above. Therefore, where the resin layer 22 further contains a black pigment, the repellent film 20 has a structure in which the surface on the side of the inorganic filler layer 21 is white while the surface on the side of the resin layer 22 is black. As such, the repellent film 20 with one side being white and the other side being black can reduce the ground temperature when covering the ground with the white side facing upward and increase the ground temperature when covering the ground with the black side facing upward. Thus, the repellent film 20 is suitable as a mulching film.

FIG. 3 is a cross-sectional view of a repellent film 30 that is yet another example of the repellent film of the present invention. The repellent film 30 has a three-layer structure. In detail, the repellent film 30 includes paired inorganic filler layers 31 and a resin layer 32 stacked in the stated order. The paired inorganic filler layers 31 each are an outermost layer. The resin layer 32 is an inner layer.

Details of the repellent film of the present invention have been described so far with reference to the drawings. However, the structure of the repellent film of the present invention is not limited to the structures illustrated in FIGS. 1 to 3. For example, the repellent film of the present invention may further include a layer other than the inorganic layer(s) and the resin layer besides the inorganic filler layer(s).

The repellent film of the present invention has a total thickness of preferably at least 15 µm and no greater than 200 µm, and more preferably at least 25 µm and no greater than 50 µm. As a result of the total thickness of the repellent film of the present invention being set to at least 15 µm, the repellent film of the present invention can have increased strength. As a result of the total thickness of the repellent film of the present invention being set to no greater than 200 µm, the repellent film of the present invention can be lightweight.

### [Inorganic Filler Layer]

The inorganic filler layer contains an inorganic filler and a thermoplastic resin. The inorganic filler is dispersed in a matrix constituted by the thermoplastic resin in the inorganic filler layer.

In a case in which the repellent film of the present invention has a multilayer structure, a ratio (100 × T_{N}/T_{A}) of a total thickness T_{N} of the inorganic filler layer(s) to a total thickness T_{A} of the repellent film of the present invention is preferably at least 70% and no greater than 90%.

### (Inorganic Filler)

The inorganic filler includes calcium carbonate particles. Here, the calcium carbonate particles used as the inorganic filler significantly differ in purity depending on where they are obtained. In detail, most of calcium carbonate particles used as an inorganic filler are obtained by directly granulating calcium carbonate ore obtained as a mineral resource without refining. Therefore, calcium carbonate particles significantly differ in purity depending on the place of origin. For example, there are low-purity calcium carbonate particles with a calcium carbonate content of about 70 mass% depending on the place of origin. By contrast, there are high-purity calcium carbonate particles obtained by chemical synthesis as calcium carbonate particles for food use or pharmaceutical use.

The repellent film of the present invention preferably contains calcium carbonate particles with as high a purity as possible. Specifically, the calcium carbonate has a percentage content of preferably at least 90% by mass in the calcium carbonate particles, more preferably at least 95% by mass, and further preferably at least 97% by mass. As a result of the percentage content of the calcium carbonate being set to at least 90% by mass in the calcium carbonate particles, that is, as a result of the purity of the calcium carbonate particles being increased, the following effects can be obtained. The higher the purity of the calcium carbonate particles is, the higher the diffuse reflectance thereof is. Accordingly, the whiteness of the calcium carbonate particles increases as the purity thereof is increased. Thus, effect of repelling flying insects and effect of promoting photosynthesis of crops can be enhanced. The calcium carbonate particles can have more stable pH as the purity thereof is increased. Thus, antimicrobial and anti-fungal properties can be exhibited stably. Furthermore, the impact of the calcium carbonate particles on the human body and the environment can be reduced as the purity thereof is increased.

The calcium carbonate particles preferably have a maximum particle diameter of no greater than 20 µm. As a result of the maximum particle diameter of the calcium carbonate particles being set to no greater than 20 µm, the aforementioned micro-level kenzan structure can be easily formed on the surface of the repellent film of the present invention. As a result, the repellent film of the present invention can further effectively reduce feeding damage by gastropods.

Note that the maximum particle diameter of the calcium carbonate particles can be measured by the following method. First, the particle diameters (major axes) of the calcium carbonate particles at 5 locations (field of view: 100 µm × 100 µm) randomly selected from a section of the inorganic filler layer are measured using an electron microscope. Thereafter, the maximum value of the measured particle diameters of the calcium carbonate particles is taken to be the maximum particle diameter of the calcium carbonate particles.

The calcium carbonate particles may be surface treated. Examples of the surface treatment include treatment using a silane coupling agent and treatment using metal soap (e.g., treatment with calcium stearate). When the calcium carbonate particles are surface treated, excessive generation of voids at the boundaries between the calcium carbonate particles and the thermoplastic resin can be inhibited. As a result, the repellent film of the present invention can have increased strength.

In a case in which the repellent film of the present invention has a multilayer structure, the inorganic filler has a percentage content of preferably greater than 50.0% by mass and no greater than 65.0% by mass in the inorganic filler layer, and more preferably greater than 50.0% by mass and no greater than 60.0% by mass. As a result of the content percentage of the inorganic particles being set to greater than 50.0% by mass in the inorganic filler layer, the repellent film of the present invention can further effectively reduce feeding damage by gastropods. As a result of the percentage content of the calcium carbonate particles being set to no greater than 65.0% by mass in the inorganic filler layer, the repellent film of the present invention can have increased strength.

The inorganic filler layers may contain an additional inorganic filler besides the calcium carbonate particles. Examples of the additional inorganic filler include calcium sulfate particles, barium sulfate particles, kaolin particles, mica particles, zinc oxide particles, dolomite particles, glass fibers, hollow glass microbeads, silica particles, chalk particles, talc, pigment particles, titanium dioxide particles, silicon dioxide particles, bentonite, clay, diatomaceous earth, and zeolite particles.

The calcium carbonate particles have a percentage content of preferably at least 90% by mass in the inorganic filler, and more preferably at least 95% by mass.

### (Thermoplastic Resin)

Examples of the thermoplastic resin contained in the inorganic filler layer include polyolefin resins, acrylonitrile-butadiene-styrene (ABS) resins, polyamide resins, polystyrene resins, and polyester resins (e.g., polyethylene terephthalate resin and polybutylene terephthalate resin).

Examples of the polyolefin resins include polyethylene resins and polypropylene resins. Examples of the polyethylene resins include high density polyethylene (HDPE), low density polyethylene (LDPE), medium density polyethylene, and linear low density polyethylene (L-LDPE).

The thermoplastic resin contained in the inorganic filler layer is preferably polyolefin resin, and more preferably polyethylene resin.

### (Additional Additive)

The inorganic filler layer may further contain an additional additive besides the inorganic filler. Examples of the additional additive include a coupling agent, a lubricant, a filler dispersant, an antistatic agent, an antioxidant, a heat stabilizer, an ultraviolet absorbing agent, and a weather stabilizer.

As described above, the inorganic filler layer has a high percentage content of the inorganic filler. Therefore, the inorganic filler layer preferably contains a filler dispersant as the additional additive. As a result of the inorganic filler layer containing a filler dispersant, dispersibility of the inorganic filler can be increased. Examples of the filler dispersant include metal soap (e.g., calcium stearate and magnesium stearate). In a case in which the inorganic filler layer contains an additional additive, the additional additive preferably has a percentage content of at least 0.5% by mass and no greater than 5.0% by mass in the inorganic filler layer.

### [Resin Layer]

The resin layer is a layer containing a thermoplastic resin. The ratio of the thickness of the resin layer to the total thickness of the repellent film of the present invention is at least 2.0% and no greater than 20.0%, and preferably at least 4.0% and no greater than 10.0%. As a result of the ratio of the thickness of the resin layer being set to at least 2.0%, formability of the repellent film of the present invention can be increased. As a result of the ratio of the thickness of the resin layer being set to no greater than 20.0%, the percentage content of the inorganic filler in the repellent film of the present invention can be easily adjusted to greater than 50.0% by mass.

Examples of the thermoplastic resin contained in the resin layer include the same resins as those listed as the examples of the thermoplastic resin contained in the inorganic filler layer. The thermoplastic resin contained in the resin layer is preferably a polyolefin resin, and more preferably polyethylene resin.

The thermoplastic resin has a percentage content of preferably at least 90% by mass in the resin layer, and more preferably at least 95% by mass.

The resin layer preferably contains no inorganic filler, but may contain a trace amount of an inorganic filler. The inorganic filler has a percentage content of preferably at least 0% by mass and no greater than 10% by mass in the resin layer, and more preferably at least 0% by mass and no greater than 5% by mass.

### [Production Method]

The repellent film of the present invention can be produced by inflation, for example. In detail, in a case in which the repellent film of the present invention includes a single layer, a material for inorganic filler layer formation containing an inorganic filler and a thermoplastic resin is prepared as a material for forming the inorganic filler layer. The material for inorganic filler layer formation is extruded using an extruder with a ring-shaped die set therein. Air is sent into the resultant cylindrical extrudate for cooling and the cooled extrudate is cut. A single-layer repellent film of the present invention can be obtained in the manner described above.

In a case in which the repellent film of the present invention includes multiple layers by contrast, a material for resin layer formation containing a thermoplastic resin is prepared as a material for forming the resin layer in addition to preparation of the above-described material for inorganic filler layer formation. The material for inorganic filler layer formation and the material for resin layer formation are extruded together using an extruder with a ring-shaped die set therein. Air is sent into the resultant cylindrical extrudate for cooling and the cooled extrudate is cut. A multi-layer repellent film of the present invention can be obtained in the manner described above.

Voidage of the resultant inorganic filler layer tends to be increased (density tends to be reduced) by extrusion of the material for inorganic filler layer formation by inflation compared to by extrusion of the material for inorganic filler layer formation by another method (e.g., T-die molding). Therefore, the repellent film of the present invention can be easily and reliably obtained by inflation.

### <Second Embodiment: Plant Cultivation Method>

A plant cultivation method according to a second embodiment of the present invention uses the repellent film according to the first embodiment. The plant cultivation method of the present invention can reduce feeding damage by gastropods. The plant cultivation method of the present invention can be used for cultivating grains, vegetables, and mushrooms. The plant cultivation method of the present invention is suitable as a method for cultivating crops (e.g., strawberries, cabbages, shiitake mushrooms, and asparagus) that are easily damaged by gastropods and that have high commercial value.

The plant cultivation method of the present invention is preferably a method of organic farming. Organic farming is susceptible to feeding damage by gastropods due to limited use of pesticides. When the plant cultivation method of the present invention is implemented in organic farming, reduction of feeding damage by gastropods can be achieved without using pesticides. Note that the organic farming refers to agriculture conducted by an agricultural production method that reduces environmental impacts derived from agricultural production as much as possible, on the basis of non-use of chemically synthesized fertilizers and pesticides and non-use of recombinant DNA technologies.

The following describes one example of usage of the repellent film (in detail, the repellent film 10 illustrated in FIG. 1) according to the first embodiment in the plant cultivation method of the present invention. In the example of the use of the repellent film 10, the repellent film 10 is used as a mulching film as illustrated in FIG. 4. FIG. 4 illustrates a side of soil S on which a ridge R is formed. The ridge R is covered with the repellent film 10. A hole is formed in a part of the repellent film 10 that corresponds to the vicinity of the top of the ridge R. A plant P is growing on the ridge R through the hole formed in the repellent film 10. The repellent film 10 inhibits gastropods living in the surroundings of the soil S from climbing the ridge R and approaching the plant P. As a result, feeding damage by gastropods can be inhibited. Note that the repellent film 10 also fulfills the role (e.g., adjustment of soil temperature, suppression of weed propagation, and prevention of soil adhesion to crops) required of a general mulching film in addition to the role to inhibit feeding damage by gastropods.

The following describes another example of the use of the repellent film (in detail, the repellent film 10 illustrated in FIG. 1) according to the first embodiment in the plant cultivation method of the present invention. In the other example of the use of the repellent film 10, soil around a greenhouse G in which a plant is cultivated is covered with a band-shaped repellent film 10. In a manner as above, a route I of entry for gastropods from the outside to the inside of the greenhouse G is blocked by covering the soil around the greenhouse G with the band-shaped repellent film 10. This can reduce the number of gastropods living in the inside of the greenhouse G to inhibit feeding damage by gastropods. Although an example in which a plant is cultivated in the greenhouse G is described with reference to FIG. 5, it is sufficient in the use to surround the soil around the plant with the band-shaped repellent film 10 and the method of the present embodiment is applicable to outdoor cultivation, for example.

The band-shaped repellent film 10 has a width of preferably at least 100 mm and no greater than 5000 mm, and more preferably at least 500 mm and no greater than 2000 mm.

The use of the repellent film according to the first embodiment is merely an example in the plant cultivation method of the present invention. The use of the plant cultivation method of the present invention is not limited specifically as long as the repellent film of the first embodiment is used. It is probable for example in strawberry cultivation that strawberry fruits are cultivated with the fruits placed on a film. In the cultivation method of the present invention, the repellent film according to the first embodiment can be used as the film. Furthermore, the repellent film according to the first embodiment can be used as a cord (e.g., an inducement cord or a binding cord) that supports a plant or as a sack for wrapping fruits in the plant cultivation method of the present invention.

### [Examples]

The following further describes the present invention using examples. However, the present invention is no way limited to the examples.

### [Material]

A masterbatch (calcium carbonate particles 70% by mass) was obtained by chipping after kneading 30 parts by mass of polyethylene resin pellets and 70 parts by mass of calcium carbonate particles using a twin shaft extruder. Next, 75 parts by mass of the masterbatch and 25 parts by mass of polyethylene resin pellets were mixed to obtain a material for inorganic filler formation.

By inflation, a single-layer repellent film including an inorganic filler layer was formed with the above-described material for inorganic filler layer formation. The repellent film had a thickness of 40 µm. The inorganic filler had a percentage content of 52.5% by mass in the repellent film. The inorganic filler had a density of 1.15 g/cm³ in the repellent film. The resultant film was taken to be a repellent film of Example 1.

Using the repellent film of Example 1 as a mulching film, a strawberry cultivation test was conducted. The strawberry cultivation test was conducted at a firm in Kasaoka City, Okayama prefecture, Japan, from A.D. March, 2017 to June, 2018. In detail, strawberry seedlings were planted in a ridge formed on the soil in a greenhouse of the aforementioned firm. Next, the ridge was covered with the repellent film of Example 1. Next, a hole was formed in an area of the repellent film of Example 1 where the strawberry seedlings are covered to expose the strawberry seedlings. Strawberries were cultivated in the state as described above and harvested.

Here, strawberries turn green when damaged by slugs. Strawberries that have turned green cannot be shipped. In view of the foregoing, the ratio of the yield of strawberries that had turned green (strawberries damaged by slugs) to the total yield of strawberries was measured and taken to be a "loss rate".

When the strawberry cultivation was conducted using the repellent film of Example 1 as a mulching film, the loss rate was almost 0%. By contrast, the loss rate was approximately 15% in strawberry cultivation up to the previous year (A.D. 2016) that had used a typical mulching film. From the above, it is thought that feeding damage by gastropods can be inhibited by using the repellent film of Example 1 as a mulching film.

At the same time, repellant effect by the repellent film of Example 1 (width 1000 mm) processed into a band shape was checked. First, two greenhouses were prepared in which strawberries were cultivated. The band-shaped repellent film of Example 1 was placed on the soil around one greenhouse (also referred to below as greenhouse A) of the greenhouses to surround the greenhouse A. The above work was not done for the other greenhouse (also referred to below as greenhouse B). Next, slugs within each of the greenhouses A and B were removed. One day later, the number of slugs inside each greenhouse was visually checked. As a result, no slug was visually observed in the greenhouse A around which the band-shaped repellent film of Example 1 was placed. By contrast, more than 10 slugs were present per strawberry plant in the greenhouse B. That is, the band-shaped repellent film of Example 1 inhibited slugs from entering the inside from the outside of the greenhouse A.

From the above, it is thought that the repellent film of Example 1 can exert significant effect of repelling gastropods and inhibit feeding damage by gastropods.

Subsequently, the relationship between effect of repelling gastropods and the percentage content of the inorganic filler was studied. First, repellent films of Comparative Examples 1 to 4 and Examples 2 to 4 were produced according to the same method as that for producing the aforementioned repellent film of Example 1 in all aspects other than the following changes. In the production of the repellent films of Comparative Examples 1 to 4 and Examples 2 to 4, the amounts of the polyethylene resin pellets (PE resin pellets) and the masterbatch used were as shown below in Table 1 in preparation of materials for inorganic filler layer formation.

Subsequently, the following repellant effect confirmation test was conducted. First, the surface of moist soil in the shade was covered with any of the repellent films of Comparative Examples 1 to 4 and Examples 2 to 4 each processed into a square shape of 50 cm × 50 cm. One day later, the repellent film was removed and the number of slugs (slugs that had burrowed under the repellent film) present on the surface of the soil in the area covered with the repellent film was counted. The test was conducted three times on different days. Effect of repelling gastropods was determined to be good if the counted number of slugs (average value of 3 measurements) was no greater than 5 and determined to be poor if it was at least 6. The results are shown below in Table 1.

**[Table 1]**

| | PE resin pellet [part by mass] | Masterbatch [part by mass] | Calcium carbonate particles [% by mass] | Number of slugs [count] |
|---|---|---|---|---|
| Comparative Example 1 | 100 | 0 | 0 | 15 |
| Comparative Example 2 | 71 | 29 | 20 | 14 |
| Comparative Example 3 | 57 | 43 | 30 | 12 |
| Comparative Example 4 | 43 | 57 | 40 | 11 |
| Example 2 | 27 | 73 | 51 | 2 |
| Example 3 | 21 | 79 | 55 | 2 |
| Example 4 | 14 | 86 | 60 | 0 |

As shown in Table 1, the repellent films of Examples 2 to 4 with a percentage content of the calcium carbonate particles of greater than 50% by mass were evaluated as good in effect of repelling gastropods. By contrast, the repellent films of Comparative Examples 1 to 4 with a percentage content of the calcium carbonate particles of no greater than 50% by mass were evaluated as poor in effect of repelling gastropods. The reason why effect of repelling gastropods by the repellent film of each of Comparative Examples 1 to 4 was poor is thought to be that the calcium carbonate particles hardly bled out due to high percentage content of the thermoplastic resin in addition to low percentage content of the calcium carbonate particles being the effective component.

Subsequently, the relationship between effect of repelling gastropods and the density of repellent films was studied. First, repellent films of Comparative Examples 5 to 7 were produced according to the same method as that for producing the repellent films of Comparative Example 2 to 4 in all aspects other than the following changes. In the production of the repellent films of Comparative Examples 5 to 7, the amounts of the polyethylene resin pellets (PE resin pellets) and the masterbatch used were as shown below in Table 2 in preparation of materials for inorganic filler layer formation. Furthermore, in the production of the repellent films of Comparative Examples 5 to 7, single-layer repellent films each including an inorganic filler layer were formed using the material for inorganic filler layer formation by T-die molding (T method) rather than inflation (I method). The repellent films of Comparative Examples 5 to 7 had a thickness of 40 µm. Next, each density of the repellent films of Comparative Examples 5 to 7 and Examples 2 to 4 was measured. Next, the aforementioned repellant effect confirmation test was conducted using the repellent films of Comparative Examples 5 to 7 and Examples 2 to 4. The evaluation results are shown below in Table 2.

**[Table 2]**

| | PE resin pellet [part by mass] | Masterbatch [part by mass] | Calcium carbonate particles [% by mass] | Method | Density [g/m³] | Number of slugs [count] |
|---|---|---|---|---|---|---|
| Comparative Example 5 | 27 | 73 | 51 | T method | 1.35 | 11 |
| Comparative Example 6 | 21 | 79 | 55 | T method | 1.43 | 9 |
| Comparative Example 7 | 14 | 86 | 60 | T method | 1.50 | 8 |
| Example 2 | 27 | 73 | 51 | I method | 1.10 | 2 |
| Example 3 | 21 | 79 | 55 | I method | 1.16 | 2 |
| Example 4 | 14 | 86 | 60 | I method | 1.20 | 0 |

As shown in Table 2, effect of repelling gastropods was evaluated as good for the repellent films of Examples 2 to 4 each of which was produced by inflation and each of which had a density of at least 1.05g/cm³ and no greater than 1.25g/cm³. By contrast, effect of repelling gastropods was evaluated as poor for the repellent films of Comparative Examples 5 to 7 each of which was produced by T-die molding and each of which had a density of greater than 1.25g/cm³. A reason why the repellent films of Comparative Examples 5 to 7 were poor in effect of repelling gastropods is thought to be that the calcium carbonate particles hardly bled out due to not so many voids being present between the calcium carbonate particles and the thermoplastic resin.

From the above, it is concluded that effect of repelling gastropods can be significantly enhanced in a repellent film including an inorganic filler layer by setting the percentage content of the inorganic filler to greater than 50.0% by mass and setting the density of the repellent film to at least 1.05g/cm³ and no greater than 1.25g/cm³.

### INDUSTRIAL APPLICABILITY

The repellent film of the present invention can be used for cultivation.

## Claims

1. A gastropod repellent film comprising
at least an inorganic filler layer containing an inorganic filler and a thermoplastic resin, wherein
the inorganic filler layer is an outermost layer,
the inorganic filler includes calcium carbonate particles,
the inorganic filler has a percentage content of greater than 50.0% by mas in the gastropod repellent film, and
the gastropod repellent film has a density of at least 1.05g/cm³ and no greater than 1.25g/cm³.

2. The gastropod repellent film according to claim 1, wherein
the thermoplastic resin includes polyolefin resin.

3. The gastropod repellent film according to claim 1 or 2, wherein
the calcium carbonate particles have a maximum particle diameter of no greater than 20 µm.

4. A plant cultivation method for cultivating a plant, wherein
the gastropod repelling film according to any one of claims 1 to 3 is used.

5. The plant cultivation method according to claim 4, wherein
the gastropod repellent film is used as a mulching film.

6. The plant cultivation method according to claim 4, wherein
soil around the plant is covered with the gastropod repellent film, the gastropod repellent film being band-shaped.

7. The plant cultivation method according to any one of claims 4 to 6, wherein
the method is a method of organic farming.
